# EUROPÄISCHE PATENTSCHRIFT

(11) **EP 3 013 457 B1**
(45) Veröffentlichungstag und Bekanntmachung des Hinweises auf die Patenterteilung: **23.05.2018**
(21) Anmeldenummer: 14731939.6
(22) Anmeldetag: 16.06.2014
(51) Int. Cl.: B01D 53/00, B01D 9/00, B04B 5/08, B04B 11/02, B04B 11/06, C01B 21/04, C01B 13/02, F25J 3/00

(54) **VERFAHREN ZUR TRENNUNG EINES VERFLÜSSIGBAREN GASGEMISCHES**
METHOD FOR SEPARATING A LIQUEFIABLE GAS MIXTURE
PROCÉDÉ DE SÉPARATION D'UN MÉLANGE GAZEUX POUVANT ÊTRE LIQUÉFIÉ

(30) Priorität: 27.06.2013 AT 5342013
(43) Veröffentlichungstag der Anmeldung: 04.05.2016
(73) Patentinhaber: Fuchs, Alfred, 83346 Bergen (DE)
(72) Erfinder: Fuchs, Alfred, 83346 Bergen (DE)
(74) Vertreter: KLIMENT & HENHAPEL
(86) Internationale Anmeldenummer: PCT/EP2014/062575
(87) Internationale Veröffentlichungsnummer: WO 2014/206792

(56) Entgegenhaltungen:
- WO-A1-00/47305
- US-A- 2 062 537
- US-A1- 2004 026 572
- US-A1- 2008 307 961

## Beschreibung

### GEBIET DER ERFINDUNG

Die vorliegende Erfindung betrifft ein Verfahren zur Trennung eines verflüssigbaren Gasgemisches aus mehreren Bestandteilen, umfassend zumindest einen ersten Bestandteil und einen zweiten Bestandteil, wobei bei einem erhöhten Druck p₁ der erste Bestandteil einen Schmelzpunkt T*_{K1} aufweist, der höher ist als der Schmelzpunkt T*_{K2} des zweiten Bestandteils.

### STAND DER TECHNIK

In vielen industriellen Prozessen werden Trennverfahren benötigt, um Materialgemische in deren Bestandteile bzw. Fraktionen aufzuteilen. Hierbei spielen insbesondere thermische Trennverfahren, also auf der Einstellung eines thermodynamischen Phasengleichgewichts beruhende Trennverfahren wie z.B. Destillation, eine große Rolle. Zu diesen Trennverfahren gehören auch Verfahren zur Gastrennung bzw. zur Trennung eines Gasgemisches, insbesondere Luft. Speziell die Trennung von Stickstoff und Sauerstoff ist für viele industrielle Prozesse relevant, beispielsweise um möglichst reinen Sauerstoff für das Oxyfuel-Verfahren zur Verfügung zu stellen. Beim Oxyfuel-Verfahren handelt es sich um ein Verbrennungsverfahren, welches die Erreichung besonders hoher Flammentemperaturen ermöglicht und sich als Grundlage für Kraftwerksprozesse mit hohem Energieeinsparungspotenzial eignet. Dem gegenüber steht der Energieaufwand, der für die Bereitstellung des möglichst reinen Sauerstoffs nötig ist.

Die großtechnische Erzeugung von Sauerstoff bzw. die großtechnische Gaszerlegung findet üblicherweise kryotechnisch, gemäß dem Linde-Verfahren statt. Im Linde-Verfahren wird die Luft zunächst verflüssigt. Zur Zerlegung werden voluminöse Rektifikationssäulen benutzt, in welchen flüssige Luft über mehrere Rektifikationsböden im Gegenstrom zum aufsteigenden Gas nach unten läuft, wobei die verflüssigte Luft Sauerstoff aus dem Gas aufnimmt und Stickstoff abgibt.

Darüberhinaus sind Verfahren, welche auf Adsorption und Membranen, die nur für Sauerstoff, aber nicht für Stickstoff durchlässig sind, grundsätzlich bekannt. Auch diese Verfahren arbeiten in der Gasphase, was einen relativ großen Anlagenaufwand bedingt.

Aus der US 2004/0026572 A1 ist ein Raketentriebwerk bekannt, bei dem angesaugte Luft mittels Wärmtauschern verflüssigt wird. In einem Separator findet sodann eine Trennung von verflüssigtem Sauerstoff und verflüssigtem Stickstoff statt, wobei als Separator eine Zentrifuge verwendet werden kann.

Aus der US 2008/0307961 A1 sind ein Verfahren und eine Vorrichtung zur Separation von Edelgasen aus einem Gasgemisch in der Gasphase bekannt, wobei eine rohrförmige Zentrifuge verwendet wird.

### AUFGABE DER ERFINDUNG

Aufgabe der vorliegenden Erfindung ist es, ein Verfahren zur Trennung eines verflüssigbaren Gasgemisches zur Verfügung zu stellen, welches einen kompakteren Aufbau als die aus dem Stand der Technik bekannten Anlagen ermöglicht und damit den Anlagenaufwand verringert.

### DARSTELLUNG DER ERFINDUNG

Um einen kompakteren Aufbau gegenüber aus dem Stand der Technik bekannten Vorrichtungen zur Trennung eines verflüssigbaren Gasgemisches zu ermöglichen, ist es erfindungsgemäß vorgesehen, die Trennung nicht in der Gasphase durchzuführen, sondern den Phasenübergang flüssig-fest zu nutzen. Da die Schmelzenthalpie von Stoffen typischerweise eine Größenordnung kleiner ist als deren Verdampfungsenthalpie, kann neben einem kompakteren Aufbau eine gegenüber Stand-der-Technik-Verfahren, die sich den Phasenübergang gasförmig-flüssig zunutze machen, schnellere Kinetik erzielt werden.

Vorausgesetzt wird ein verflüssigbares Gasgemisch aus mehreren atomaren oder molekularen Bestandteilen bzw. Komponenten in verflüssigter, vorzugsweise vollständig verflüssigter Form, wobei zumindest ein erster Bestandteil vorhanden sein muss, der bei einem Druck p₁ einen Schmelzpunkt T*_{K1} aufweist, sowie ein zweiter Bestandteil, der beim selben Druck p₁ einen Schmelzpunkt T*_{K2} mit T*_{K2} < T*K1 aufweist. In der Regel wird p1 gegenüber einem anfänglichen Druck p₀ des verflüssigten Gasgemisches, wie z.B. dem Umgebungsdruck, erhöht sein. Beispielsweise weist flüssiger Stickstoff bei einem Druck von 1000 bar einen Schmelzpunkt von ca. 83 K auf, wohingegen flüssiger Sauerstoff bei diesem Druck einen Schmelzpunkt von ca. 65 K hat. Bei Umgebungsdruck sind jedoch sowohl Stickstoff als auch Sauerstoff bei einer Temperatur von 83 K flüssig.

Die unterschiedlichen Schmelzpunkte des ersten und zweiten Bestandteils bei erhöhtem Druck p₁ werden nun dahingehend ausgenützt, dass bei einer Temperatur T₀, die zwischen den Schmelzpunkten T*_{K2} und T*_{K1} liegt, der Druck des verflüssigten Gasgemisches auf p₁ erhöht wird, um den ersten Bestandteil ausfrieren zu lassen. Konkret wird ein Druckgradient im verflüssigten Gasgemisch bei T₀ erzeugt, sodass der Druck p₁ in einem begrenzten räumlichen Bereich des Gasgemisches herrscht, in welchem es zum Ausfrieren des ersten Bestandteils kommt. Das Vorliegen des ersten Bestandteils in fester Form eröffnet unterschiedliche Möglichkeiten zur bequemen Trennung vom restlichen verflüssigten Gasgemisch.

Im Gegensatz zu Kristallisation/Ausfrieren, die/das durch Temperaturdifferenz an einer Wand herbeigeführt wird und ein Ablösen des ausgefrorenen Teils von der Wand nötig macht, erlaubt die Anwendung von Hochdruck zur Kristallisation / zum Ausfrieren einen kontinuierlichen Betrieb.

Daher ist es bei einem Verfahren zur Trennung eines verflüssigbaren Gasgemisches aus mehreren Bestandteilen, umfassend zumindest einen ersten Bestandteil und einen zweiten Bestandteil, wobei bei einem erhöhten Druck p₁ der erste Bestandteil einen Schmelzpunkt T*_{K1} aufweist, der höher ist als der Schmelzpunkt T*_{K2} des zweiten Bestandteils, erfindungsgemäß vorgesehen, dass das Verfahren die folgenden Schritte umfasst:
- Überführen des Gasgemisches in einen flüssigen Zustand mit einer Temperatur T₀ und einem Druck p₀, beispielsweise durch Verflüssigen und anschließendes Abkühlen des Gasgemisches, wobei T*_{K2} < T₀ ≤ T*_{K1} und p₀ < p₁ gilt, um das Vorliegen des ersten Bestandteils und des zweiten Bestandteils in flüssiger Form bei der Temperatur T₀ und dem Druck p₀ zu gewährleisten, und wobei der erste Bestandteil in einer Ausgangskonzentration vorliegt;
- Erzeugen eines Druckgradienten im verflüssigten Gasgemisch durch Rotation des verflüssigten Gasgemisches, wobei zumindest in einem begrenzten räumlichen Bereich des verflüssigten Gasgemisches der erhöhte Druck p₁ herrscht und es zum Ausfrieren des ersten Bestandteils kommt.

Zum Überführen des Gasgemisches in den flüssigen Zustand mit Temperatur T₀ und Druck p₀ sei bemerkt, dass es auch vorstellbar wäre, diese Zustandsänderung in einem Schritt durchzuführen.

Die Ausgangskonzentration des ersten Bestandteils ist auf das verflüssigte Gasgemisch bezogen und wird z.B. in Gewichts- oder Volumsprozent angegeben.

Um einen Druckgradienten bequem einrichten und genau einstellen zu können, ist vorgesehen, dass der Druckgradient durch Rotation des verflüssigten Gasgemisches erzeugt wird.

Um eine konstruktiv einfache und kostengünstige Möglichkeit zur Erzeugung des Druckgradienten zu schaffen, ist es bei einer besonders bevorzugten Ausführungsform des erfindungsgemäßen Verfahrens vorgesehen, dass sich das verflüssigte Gasgemisch zum Erzeugen des Druckgradienten in einem Gefäß, vorzugsweise in einem Rohr, befindet, welches um eine Rotationsachse rotiert wird, wodurch der Druckgradient radial orientiert ist und wodurch innerhalb eines Radialabstands a von der Rotationsachse ein Druck kleiner als p₁ vorliegt. Vorzugsweise verläuft die Rotationsachse parallel zur Längsachse des Rohrs und liegt im Zentrum des senkrecht auf die Längsachse des Rohrs stehenden Rohr-Querschnitts. Grundsätzlich muss das Gefäß aber kein Rohr sein. Beispielsweise kann es sich auch um ein topfförmiges Gefäß handeln.

Um beim rotierenden Gefäß bzw. Rohr Luftreibung auszuschließen, kann das rotierende Gefäß innerhalb eines evakuierten Gefäßes angeordnet sein und rotieren.

Eine Möglichkeit, die ausgefrorenen Teile des ersten Bestandteils vom restlichen verflüssigten Gasgemisch zu trennen, besteht im an sich bekannten Zentrifugieren, wobei vorzugsweise das rotierende Rohr als Zentrifuge benutzt wird. Zentrifugieren bietet sich besonders dann an, wenn die Dichte der ausgefrorenen Teile des ersten Bestandteils sich von der Dichte des restlichen verflüssigten Gasgemisches, welches den zweiten Bestandteil enthält, unterscheidet. Dabei wird in den meisten Fällen die Dichte der ausgefrorenen Teile des ersten Bestandteils größer sein als die Dichte des restlichen verflüssigten Gasgemisches. In diesem Fall wandern die ausgefrorenen Teile des ersten Bestandteils in der Zentrifuge radial nach außen. Entsprechend ist es bei einer bevorzugten Ausführungsform des erfindungsgemäßen Verfahrens vorgesehen, dass der erste Bestandteil vom zweiten Bestandteil durch Zentrifugieren getrennt wird.

Eine besonders einfache und elegante Möglichkeit zur Trennung des ersten Bestandteils vom zweiten Bestandteil bzw. vom restlichen verflüssigten Gasgemisch ergibt sich, wenn die Dichte der ausgefrorenen Teile des ersten Bestandteils geringer ist als die Dichte des restlichen verflüssigten Gasgemisches, welches den zweiten Bestandteil enthält. In diesem Fall kommt es zu einer radialen Strömung der ausgefrorenen Teile des ersten Bestandteils nach innen, d.h. in Richtung der Rotationsachse, und nicht nach außen. Wie oben geschildert, ist der Druck innerhalb eines Radialabstands a von der Rotationsachse kleiner als p₁. Es kommt daher zu einem Aufschmelzen der ausgefrorenen Teile des ersten Bestandteils im Bereich innerhalb des Radialabstands a von der Rotationsachse. In diesem Bereich liegt dann ein verflüssigtes Gasgemisch vor, welches eine gegenüber der Ausgangskonzentration erhöhte Konzentration des ersten Bestandteils aufweist.

Ein konkretes Beispiel für ein solches Verhalten stellt Luft mit Stickstoff als ersten Bestandteil und Sauerstoff als zweiten Bestandteil dar. Gefrorener Stickstoff weist beispielsweise bei einer Temperatur von ca. 63 K und Normaldruck eine hexagonale Kristallstruktur mit einer Dichte von ca. 1,03 g/cm³ auf, wohingegen die Dichte von flüssigem Sauerstoff z.B. bei einer Temperatur von ca. 90 K und Normaldruck ca. 1,14 g/cm³ beträgt. Entsprechend ist es bei einer besonders bevorzugten Ausführungsform des erfindungsgemäßen Verfahrens vorgesehen, dass es sich bei dem Gasgemisch um Luft, bei dem ersten Bestandteil um Stickstoff und beim zweiten Bestandteil um Sauerstoff handelt.

Die Dichte ist klarerweise eine Funktion der Temperatur und des Drucks, sodass der genaue Wert entsprechend variiert. So weist flüssiger Sauerstoff bei ca. 70 K und Normaldruck eine Dichte von ca. 1,24 kg/l auf, um ein weiteres Beispiel zu nennen. Darüberhinaus ist es natürlich so, dass das Ausfrieren des ersten Bestandteils bzw. des Stickstoffs im Allgemeinen nicht zu vollständig reinen Kristallen führt. Die Konzentration des ersten Bestandteils in den Kristallen ergibt sich gemäß dem zugrundeliegenden Phasendiagramm. Ebenso liegen die Kristalle des ersten Bestandteils bzw. des Stickstoffs im Allgemeinen nicht in einer Flüssigkeit vor, die rein aus dem zweiten Bestandteil bzw. Sauerstoff besteht. D.h. die oben genannten Dichtewerte bzw. die Dichtewerte der Reinstoffe dienen nur zur Orientierung, die tatsächlichen Dichtewerte der Stickstoff-Kristalle bzw. der Kristalle des ersten Bestandteils und des restlichen immer noch flüssigen Gasgemisches werden von diesen Werten geringfügig abweichen.

Um die Dichte des noch flüssigen Gasgemisches näher an den Wert für den reinen flüssigen zweiten Bestandteil heranzuführen, kann das mit dem zweiten Bestandteil angereicherte flüssige Gasgemisch, welches durch die Trennung erhalten wird, rezirkuliert werden. Im oben genannten Falle der Anwendung des erfindungsgemäßen Verfahrens auf Luft kann also die Dichte des flüssig bleibenden Gasgemisches näher an jene von flüssigem Sauerstoff herangeführt werden, indem das durch die Trennung erhaltene, mit Sauerstoff angereicherte Gemisch rezirkuliert, d.h. dem flüssig gebliebenen Gasgemisch wieder zugeführt wird.

Gemäß den Phasendiagrammen betreffend die Struktur von Stickstoff und Sauerstoff als Funktion von Temperatur und Druck, ist es bei einer bevorzugten Ausführungsform des erfindungsgemäßen Verfahrens vorgesehen, dass 65 K ≤ T₀ ≤ 80 K, vorzugsweise 70 K ≤ T₀ ≤ 75 K gilt. Darüberhinaus ist es bei einer besonders bevorzugten Ausführungsform des erfindungsgemäßen Verfahrens vorgesehen, dass 20 bar ≤ p₁ ≤ 2700 bar, vorzugsweise 20 bar ≤ p₁ ≤ 1000 bar gilt. Der Ausgangsdruck p₀ ist jedenfalls geringer als p₁ und wird üblicherweise der Umgebungsdruck bzw. Normaldruck sein.

Zwar kommen in Luft noch andere Bestandteile vor, jedoch nur mit einem für das Funktionieren des erfindungsgemäßen Verfahrens vernachlässigbaren Anteil. D.h. die Dichte des restlichen verflüssigten Gasgemisches, in welchem die ausgefrorenen Stickstoff-Kristalle, also die ausgefrorenen Teile des ersten Bestandteils, schwimmen, wird im Wesentlichen durch die Dichte des flüssigen Sauerstoffs, also des zweiten Bestandteils, bestimmt. Daher ist es bei einer bevorzugten Ausführungsform des erfindungsgemäßen Verfahrens vorgesehen, dass das Gasgemisch so gewählt wird, dass der erste Bestandteil zu einer ersten Gruppe von Stoffen gehört, dass der zweite Bestandteil zu einer zweiten Gruppe von Stoffen gehört, dass bei der Temperatur T₀ und dem Druck p₁ die Stoffe der ersten Gruppe ausfrieren und die Stoffe der zweiten Gruppe flüssig bleiben, wobei die ausgefrorenen Stoffe der ersten Gruppe eine geringere Dichte aufweisen als die flüssig gebliebenen Stoffe der zweiten Gruppe. Insbesondere wenn das Gasgemisch nur aus dem ersten und dem zweiten Bestandteil besteht oder wenn der Anteil weiterer Bestandteile vernachlässigbar ist, kann mit dieser Wahl sichergestellt werden, dass die ausgefrorenen Teile des ersten Bestandteils in Richtung Rotationsachse wandern und im Bereich mit Radialabstand a von der Rotationsachse, in welchem ein Druck kleiner als p₁ herrscht, wieder aufschmelzen.

Indem somit im Bereich innerhalb des Radialabstands a von der Rotationsachse das verflüssigte Gasgemisch eine gegenüber der Ausgangskonzentration erhöhte Konzentration des ersten Bestandteils aufweist, kann eine Trennung durch Ableiten des verflüssigten Gasgemisches aus diesem Bereich erfolgen. Daher ist es bei einer bevorzugten Ausführungsform des erfindungsgemäßen Verfahrens vorgesehen, dass das verflüssigte Gasgemisch entlang eines die Rotationsachse einschließenden Bereichs, in welchem eine gegenüber der Ausgangskonzentration erhöhte Konzentration des ersten Bestandteils vorliegt, abgeleitet wird. Hiermit ist die Möglichkeit eingeschlossen, dass auch teilweise verflüssigtes Gasgemisch inklusive ausgefrorener Teile des ersten Bestandteils von außerhalb des genannten Bereichs, der durch den Radialabstand a festgelegt wird, abgeleitet wird. Vorzugsweise soll jedoch möglichst genau alles aus dem durch den Radialabstand a festgelegten Bereich abgeleitet werden, und möglichst wenig von außerhalb dieses Bereichs.

Das Ableiten wird vereinfacht, indem das Verfahren durchgeführt wird, während das verflüssigte Gasgemisch axial durch das verwendete Gefäß bzw. Rohr strömt. Daher ist es bei einer bevorzugten Ausführungsform des erfindungsgemäßen Verfahrens vorgesehen, dass das verflüssigte Gasgemisch das Gefäß parallel zur Rotationsachse durchströmt.

Zur Ableitung kann dann z.B. ein innerhalb des Gefäßes zentral angeordnetes Innenrohr mit einem lichten Innendurchmesser von vorzugsweise genau 2*a angeordnet sein. Freilich sind aber auch kleinere oder etwas größere lichte Innendurchmesser denkbar, entsprechend dem oben Gesagten. Daher ist zur Durchführung des erfindungsgemäßen Verfahrens eine Vorrichtung vorgesehen, umfassend:
- ein Gefäß, insbesondere ein Rohr, zur Aufnahme des verflüssigten Gasgemisches mit der Temperatur T₀ und dem Druck p₀, wobei das Gefäß um eine Rotationsachse rotierbar ist, um einen radial orientierten Druckgradienten im verflüssigten Gasgemisch zu erzeugen, und wobei das Gefäß vom verflüssigten Gasgemisch parallel zur Rotationsachse durchströmbar ist;
- ein innerhalb des Gefäßes angeordnetes Innenrohr zur Ableitung von verflüssigtem Gasgemisch, wobei das Innenrohr einen lichten Querschnitt aufweist und der lichte Querschnitt einen die Rotationsachse einschließenden Bereich abdeckt.

Die Verwendung eines rotierenden Gefäßes bzw. Rohrs bietet zudem eine einfache Möglichkeit, rotierende Verbraucher lokal zu integrieren oder anzukoppeln.

Grundsätzlich muss natürlich auch der radial weiter außen verbliebene Bestandteil abgeleitet werden. Im Falle der Zerlegung von Luft wäre das der flüssige Sauerstoff bzw. das mit Sauerstoff angereicherte flüssige Gemisch. Auch hierfür kann beispielsweise ein Innenrohr verwendet werden.

Im Falle von Luft als zu trennendes Gasgemisch kommt es bei Normaldruck bereits bei ca. 84 K zum Ausfrieren bzw. zur Kristallisation von Argon, wobei das gefrorene Argon mit ca. 1,8 g/cm³ eine höhere Dichte als das restliche verflüssigte Gasgemisch, insbesondere als der flüssige Sauerstoff hat. Im rotierenden Gefäß/Rohr, das auch als Zentrifuge wirkt, wandern die Argon-Kristalle daher nach außen. Um letztlich die Ausleitung der Argon-Kristalle zu begünstigen, ist es bei einer bevorzugten Ausführungsform der Vorrichtung vorgesehen, dass das Gefäß entlang der Rotationsachse einen Querschnitt aufweist, der zumindest abschnittsweise eine konische Form hat. Diese unterstützt eine axiale Bewegung der Argon-Kristalle, d.h. parallel zur Rotationsachse, zu einem Auslass im Mantel des Gefäßes bzw. Rohrs.

Es versteht sich, dass das erfindungsgemäße Verfahren mehrmals hintereinander wiederholt werden kann, um die Reinheit der erhaltenen Bestandteile zu erhöhen, bzw. können hierfür mehrere Vorrichtungen hintereinander geschaltet werden.

Im Falle von Luft mit Stickstoff als ersten Bestandteil und Sauerstoff als zweiten Bestandteil ergibt sich eine gewisse

Limitierung für den maximal erzielbaren Sauerstoffanteil im verflüssigten Gasgemisch. Diese Limitierung ist im Phasendiagramm des Stickstoff-Sauerstoff-Gemisches begründet, welches bei ca. 25% Stickstoffanteil bzw. ca. 75% Sauerstoffanteil ein Eutektikum aufweist.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische axonometrische Schnittansicht eines rotierenden Rohrs zur Erzeugung eines Druckgradienten eines im Rohr befindlichen, verflüssigten Gasgemisches
- Fig. 2: eine schematische Schnittansicht des Rohrs aus Fig. 1, jedoch mit einem im Rohr angeordneten Innenrohr
- Fig. 3: eine Ausführungsvariante analog zu Fig. 2, jedoch mit einem konischen Querschnitt des Rohrs entlang der Rotationsachse

### WEGE ZUR AUSFÜHRUNG DER ERFINDUNG

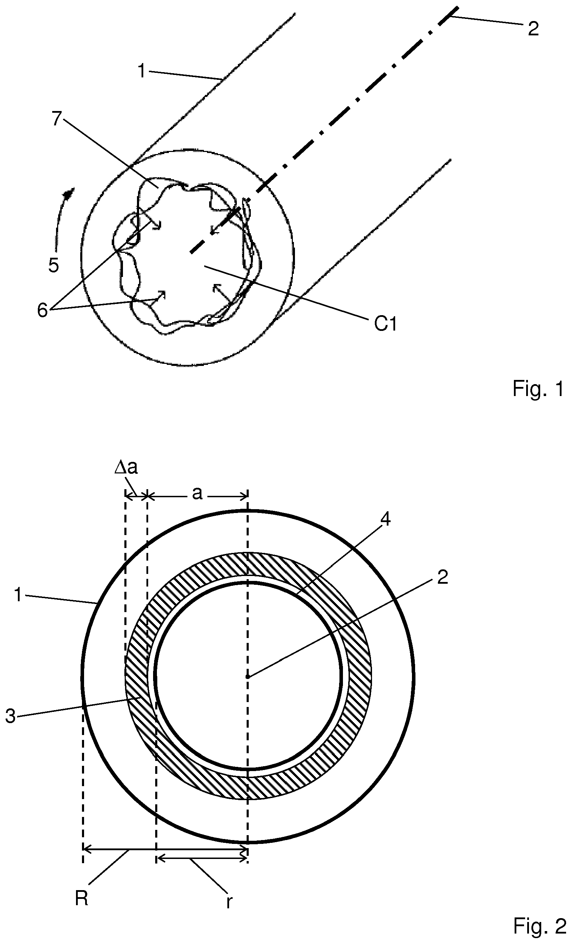

Fig. 1 zeigt eine schematische Ansicht einer Vorrichtung, umfassend ein Rohr 1 mit lichtem Radius R (vgl. Fig. 2), in welchem Rohr 1 sich ein verflüssigtes Gasgemisch, vorzugsweise verflüssigte Luft befindet. Das verflüssigte Gasgemisch weist zunächst einen Druck p₀ auf, der vorzugsweise dem Umgebungsdruck entspricht, und ist auf eine Temperatur T₀ abgekühlt.

Das verflüssigte Gasgemisch umfasst einen ersten Bestandteil K1 und einen zweiten Bestandteil K2, die beide bei Druck p₀ und Temperatur T₀ flüssig sind. Der erste Bestandteil K1 liegt im verflüssigten Gasgemisch mit einer Anfangskonzentration C0 vor.

Der erste Bestandteil K1 weist bei einem gegenüber p₀ erhöhten Druck p₁ einen Schmelzpunkt T*_{K1} auf. Der zweite Bestandteil hat beim selben Druck p₁ einen Schmelzpunkt T*_{K2} mit T*_{K2} < T*_{K1}.

Im Falle von verflüssigter Luft bildet Stickstoff den ersten Bestandteil K1 und Sauerstoff den zweiten Bestandteil K2. Bei einem Druck p₁ = 1000 bar besitzt Stickstoff einen Schmelzpunkt T*_{K1} von ca. 83 K und Sauerstoff einen Schmelzpunkt T*_{K2} von ca. 65 K.

T₀ liegt zwischen T*_{K2} und T*_{K1}. Im Falle von verflüssigter Luft kann T₀ beispielsweise zwischen 65 K und 80 K, vorzugsweise zwischen 70 K und 75 K gewählt werden.

Das Rohr 1 rotiert nun um eine zentral angeordnete Rotationsachse 2 mit einer Drehrichtung 5, wodurch wiederum das im Rohr 1 befindliche verflüssigte Gasgemisch rotiert wird. Hierdurch wird im verflüssigten Gasgemisch im Rohr 1 ein Druckgradient erzeugt, der radial von der Rotationsachse 2 weg weist. D.h. ausgehend von der Rotationsachse 2 nimmt der Druck stetig nach außen hin zu. Auf diese Weise kommt es in einem begrenzten räumlichen Bereich 3 des verflüssigten Gasgemisches zu einem Druckanstieg auf den Druck p₁ bei der Temperatur T₀.

Dieser begrenzte räumliche Bereich 3 ist in Fig. 2, die eine schematische Schnittansicht des Rohrs 1 zeigt, in einem Intervall des radialen Abstands der Rotationsachse 2 von a bis a+Δa eingezeichnet. Dabei wird Δa so klein angenommen, dass im gesamten Bereich 3 im Wesentlichen ein konstanter Druck p₁ angenommen werden kann. Im Bereich rund um die Rotationsachse 2, der einen radialen Abstand kleiner a aufweist, herrscht ein Druck kleiner p₁.

Durch Wahl der Drehzahl des Rohrs 1 kann der Druckgradient bzw. der Druck in einem bestimmten räumlichen Bereich des verflüssigten Gasgemisches innerhalb des Rohrs 1 kontrolliert eingestellt werden. Beispielsweise liegt in einem mit 18000 Umdrehungen/min rotierenden Rohr 1, welches mit flüssiger Luft gefüllt ist, im radialen Abstand von a = 24 cm von der Rotationsachse 2 der Druck p1 von ca. 1000 bar vor.

Somit kommt es im Bereich 3 - aber grundsätzlich natürlich auch außerhalb, d.h. bei einem Radialabstand größer a - zum Ausfrieren des ersten Bestandteils K1 bzw. zum Ausfrieren / zur Kristallisation von Stickstoff.

Weisen die ausgefrorenen Teile des ersten Bestandteils K1 eine Dichte größer als jene des verbleibenden verflüssigten Gasgemisches auf, so wandern diese Teile im rotierenden Rohr 1 nach außen, da das rotierende Rohr 1 als Zentrifuge wirkt. D.h. diese gefrorenen Teile des ersten Bestandteils K1 können in an sich bekannter Weise durch Zentrifugieren entfernt werden.

In Fig. 1 ist jedoch der Fall dargestellt, bei welchem die ausgefrorenen Teile des ersten Bestandteils K1 eine geringere Dichte aufweisen als das verbleibende verflüssigte Gasgemisch. Ein Beispiel hierfür ist gefrorener Stickstoff in verflüssigter Luft. Die geringere Dichte der ausgefrorenen Teile des ersten Bestandteils K1 bzw. der Stickstoff-Kristalle führt dazu, dass sich eine radiale Strömung 6 der ausgefrorenen Teile des ersten Bestandteils K1 bzw. der Stickstoff-Kristalle zur Rotationsachse 2 hin einstellt.

Um die Strömungsverhältnisse im Rohr 1 zwecks Vermeidung von Unwucht zu strukturieren, können Leitelemente innerhalb des Rohrs 1 vorgesehen sein (nicht dargestellt). Die solcherart kanalisierte Strömung kann zu einer Vergleichmäßigung des im Folgenden beschriebenen Prozesses führen.

Sobald die ausgefrorenen Teile des ersten Bestandteils K1 den Bereich 3 verlassen und Radialabstände zur Rotationsachse 2 aufweisen, die kleiner a sind, sind sie Drücken ausgesetzt, die kleiner als p₁ sind. Bei einem hinreichend kleinen Druck, der kleiner als p₁ ist, kommt es zum Schmelzen der ausgefrorenen Teile des ersten Bestandteils K1. Folglich findet sich innerhalb eines Bereichs rund um die Rotationsachse 2 mit Radialabständen kleiner a ein verflüssigtes Gasgemisch mit einer erhöhten Konzentration C1 des ersten Bestandteils K1.

Die durchgezogenen Schlangenlinien in Fig. 1 deuten eine Übergangszone 7 an, in welcher die ausgefrorenen Teile bzw. Stickstoff-Kristalle aufschmelzen und "matschig" sind.

Zur Trennung der Bestandteile K1, K2 kann nun das verflüssigte Gasgemisch mit der erhöhten Konzentration C1 des ersten Bestandteils K1 aus dem Bereich rund um die Rotationsachse 2 mit Radialabständen kleiner a abgeleitet werden. Dies kann, wie in Fig. 2 schematisch skizziert ist, mittels eines Innenrohrs 4 erfolgen, welches im gezeigten Ausführungsbeispiel zentrisch innerhalb des Rohrs 1 angeordnet ist. Das Innenrohr 4 weist einen lichten Radius r und einen entsprechenden kreisförmigen lichten Querschnitt auf. Mit seinem lichten Querschnitt überdeckt das Innenrohr 4 also einen Bereich, der die Rotationsachse 2 einschließt.

Indem das verflüssigte Gasgemisch das Rohr 1 axial bzw. parallel zur Rotationsachse 2 durchströmt, ist es zur Ableitung des verflüssigten Gasgemisches mit erhöhter Konzentration C1 des ersten Bestandteils K1 lediglich erforderlich, das Innenrohr 4 im Rohr 1 wie beschrieben anzuordnen.

Um sicherzustellen, dass keine ausgefrorenen Teile des ersten Bestandteils K1 bzw. keine Stickstoff-Kristalle durch das Innenrohr 4 abgeleitet werden müssen, ist im

Ausführungsbeispiel der Fig. 2 der lichte Radius r kleiner als a gewählt.

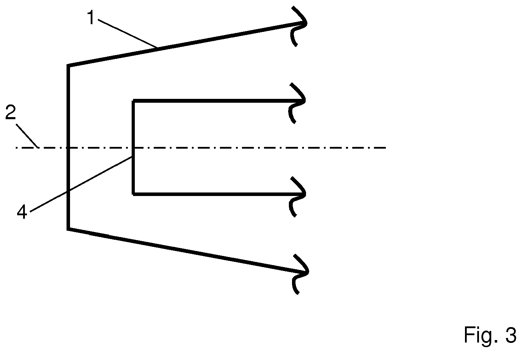

Fig. 3 zeigt eine schematische Schnittansicht einer weiteren Ausführungsvariante der Vorrichtung zur Durchführung des erfindungsgemäßen Trennverfahrens. Hierbei weist der Querschnitt des Rohrs 1 entlang der Rotationsachse 2 eine konische Form auf. Wie bereits festgehalten, bewegen sich Kristalle bzw. ausgefrorene Teile eines Bestandteils des verflüssigten Gasgemisches mit einer Dichte größer als jene des restlichen verflüssigten Gasgemisches im rotierenden Rohr 1 radial nach außen, von der Rotationsachse 2 weg. Die konische Form begünstigt den Bewegungsanteil dieser Kristalle bzw. ausgefrorenen Teile parallel zur Rotationsachse 2 zu einem Auslass (nicht dargestellt) im Mantel des Rohrs 1 hin. Ein Beispiel für solche Kristalle sind Argon-Kristalle, die bei der erfindungsgemäßen Trennung von verflüssigter Luft auftreten, da Argon einen höheren Schmelzpunkt aufweist als Stickstoff und Sauerstoff.

### BEZUGSZEICHENLISTE

- 1: Rohr
- 2: Rotationsachse
- 3: Begrenzter räumlicher Bereich
- 4: Innenrohr
- 5: Drehrichtung
- 6: Radiale Strömung
- 7: Übergangszone
- K1: erster Bestandteil eines Gasgemisches
- K2: zweiter Bestandteil des Gasgemisches
- C0: Ausgangskonzentration
- C1: Erhöhte Konzentration
- R: Lichter Radius des Rohrs
- r: Lichter Radius des Innenrohrs

## Patentansprüche

1. Verfahren zur Trennung eines verflüssigbaren Gasgemisches aus mehreren Bestandteilen, umfassend zumindest einen ersten Bestandteil (K1) und einen zweiten Bestandteil (K2), wobei bei einem erhöhten Druck p₁ der erste Bestandteil (K1) einen Schmelzpunkt T*_{K1} aufweist, der höher ist als der Schmelzpunkt T*_{K2} des zweiten Bestandteils (K2), **dadurch gekennzeichnet, dass** das Verfahren die folgenden Schritte umfasst:
- Überführen des Gasgemisches in einen flüssigen Zustand mit einer Temperatur T₀ und einem Druck p₀, beispielsweise durch Verflüssigen und anschließendes Abkühlen des Gasgemisches, wobei T*_{K2} < T₀ ≤ T*_{K1} und p₀ < p₁ gilt, um das Vorliegen des ersten Bestandteils (K1) und des zweiten Bestandteils (K2) in flüssiger Form bei der Temperatur T₀ und dem Druck p₀ zu gewährleisten, und wobei der erste Bestandteil (K1) in einer Ausgangskonzentration (C0) vorliegt;
- Erzeugen eines Druckgradienten im verflüssigten Gasgemisch durch Rotation des verflüssigten Gasgemisches, wobei zumindest in einem begrenzten räumlichen Bereich (3) des verflüssigten Gasgemisches der erhöhte Druck p₁ herrscht und es zum Ausfrieren des ersten Bestandteils (K1) kommt.

2. Verfahren nach Anspruch 1, **dadurch gekennzeichnet, dass** sich das verflüssigte Gasgemisch zum Erzeugen des Druckgradienten in einem Gefäß, vorzugsweise in einem Rohr (1), befindet, welches um eine Rotationsachse (2) rotiert wird, wodurch der Druckgradient radial orientiert ist und wodurch innerhalb eines Radialabstands a von der Rotationsachse (2) ein Druck kleiner als p₁ vorliegt.

3. Verfahren nach einem der Ansprüche 1 bis 2, **dadurch gekennzeichnet, dass** der erste Bestandteil (K1) vom zweiten Bestandteil (K2) durch Zentrifugieren getrennt wird.

4. Verfahren nach Anspruch 3, **dadurch gekennzeichnet, dass** das Gasgemisch so gewählt wird, dass der erste Bestandteil (K1) zu einer ersten Gruppe von Stoffen gehört, dass der zweite Bestandteil (K2) zu einer zweiten Gruppe von Stoffen gehört, dass bei der Temperatur T₀ und dem Druck p₁ die Stoffe der ersten Gruppe ausfrieren und die Stoffe der zweiten Gruppe flüssig bleiben, wobei die ausgefrorenen Stoffe der ersten Gruppe eine geringere Dichte aufweisen als die flüssig gebliebenen Stoffe der zweiten Gruppe.

5. Verfahren nach Anspruch 4, **dadurch gekennzeichnet, dass** das verflüssigte Gasgemisch entlang eines die Rotationsachse (2) einschließenden Bereichs, in welchem eine gegenüber der Ausgangskonzentration (C0) erhöhte Konzentration (C1) des ersten Bestandteils (K1) vorliegt, abgeleitet wird.

6. Verfahren nach einem der Ansprüche 2 bis 5, **dadurch gekennzeichnet, dass** das verflüssigte Gasgemisch das Gefäß (1) parallel zur Rotationsachse (2) durchströmt.

7. Verfahren nach einem der Ansprüche 1 bis 6, **dadurch gekennzeichnet, dass** es sich bei dem Gasgemisch um Luft, bei dem ersten Bestandteil (K1) um Stickstoff und beim zweiten Bestandteil (K2) um Sauerstoff handelt.

8. Verfahren nach einem der Ansprüche 1 bis 7, **dadurch gekennzeichnet, dass** 65 K ≤ T₀ ≤ 80 K, vorzugsweise 70 K ≤ T₀ ≤ 75 K gilt.

9. Verfahren nach einem der Ansprüche 1 bis 8, **dadurch gekennzeichnet, dass** 20 bar ≤ p₁ ≤ 2700 bar, vorzugsweise 20 bar ≤ p₁ ≤ 1000 bar gilt.

## Claims

1. A method for separating a liquefiable gas mixture consisting of a plurality of components, comprising at least one first component (K1) and one second component (K2), wherein, under an increased pressure p₁, the first component (K1) has a melting point T*_{K1} that is higher than the melting point T*_{K2} of the second component (K2), **characterized in that** the method comprises the following steps:
- converting the gas mixture to a liquid state at a temperature T₀ and a pressure p₀, e.g. by liquefying and subsequently cooling the gas mixture, wherein T*_{K2} < T₀ ≤ T*_{K1} and p₀ < p₁ applies, in order to ensure the presence of the first component (K1) and the second component (K2) in liquid form at temperature T₀ and pressure p₀, and wherein the first component (K1) is present in an initial concentration (C0);
- producing a pressure gradient in the liquefied gas mixture by rotation of the liquefied gas mixture, wherein the increased pressure p₁ prevails at least in a limited spatial region (3) of the liquefied gas mixture, and freeze separation of the first component (K1) occurs.

2. A method according to claim 1, **characterized in that** the liquefied gas mixture is present in a vessel, preferably in a tube (1), for generating the pressure gradient, which vessel rotates about a rotational axis (2), as a result of which the pressure gradient is radially oriented and a pressure less than p₁ is present within a radial distance a from the rotational axis (2).

3. A method according to one of the claims 1 to 2, **characterized in that** the first component (K1) is separated from the second component (K2) by centrifuging.

4. A method according to claim 3, **characterized in that** the gas mixture is selected in such a way that the first component (K1) belongs to a first group of substances, the second component (K2) belongs to a second group of substances, the substances of the first group freeze out at the temperature T₀ and the pressure p₁ and the substances of the second group remain liquid, wherein the freeze-separated substances of the first group have a lower density than the substances of the second group which have remained liquid.

5. A method according to claim 4, **characterized in that** the liquefied gas mixture is discharged along a region including the rotational axis (2), in which an increased concentration (C1) of the first component (K1) is present, which increased concentration (C1) is increased over the initial concentration (C0).

6. A method according to one of the claims 2 to 5, **characterized in that** the liquefied gas mixture flows through the vessel (1) parallel to the rotational axis (2) .

7. A method according to one of the claims 1 to 6, **characterized in that** the gas mixture concerns air, in which the first component (K1) concerns nitrogen and the second component (K2) concerns oxygen.

8. A method according to one of the claims 1 to 7, **characterized in that** 65 K ≤ T₀ ≤ 80 K applies, preferably 70 K ≤ T₀ ≤ 75 K.

9. A method according to one of the claims 1 to 8, **characterized in that** 20 bar ≤ p₁ ≤ 2700 bar applies, preferably 20 bar ≤ p₁ ≤ 1000 bar.

## Revendications

1. Procédé pour la séparation d'un mélange gazeux liquéfiable composé de plusieurs composants, comprenant au moins un premier composant (K1) et un deuxième composant (K2), le premier composant (K1) présentant sous une pression augmentée p₁ un point de fusion T*_{K1} plus élevé que le point de fusion T*_{K2} du deuxième composant (K2), **caractérisé en ce qu'**il comprend les étapes suivantes :
- passage du mélange gazeux à un état liquide à une température T₀ et une pression p₀, par exemple par liquéfaction puis refroidissement du mélange gazeux, avec T*_{K2} < T₀ ≤ T_{K1} et p₀ < p₁, afin de garantir la présence du premier composant (K1) et du deuxième composant (K2) sous forme liquide à la température T₀ et la pression p₀, le premier composant (K1) étant présent à une concentration de départ (C0) ;
- création d'un gradient de pression dans le mélange gazeux liquéfié par rotation du mélange gazeux liquéfié, la pression augmentée p₁ régnant au moins dans une zone limitée dans l'espace (3) du mélange gazeux liquéfié et le premier composant (K1) étant amené à congélation.

2. Procédé selon la revendication 1, **caractérisé en ce que** le mélange gazeux liquéfié se trouve, pour produire le gradient de pression, dans un contenant, de préférence dans un tuyau (1) qui est entraîné en rotation autour d'un axe de rotation (2), de sorte que le gradient de pression est orienté dans le sens radial et qu'une pression inférieure à p₁ est présente à l'intérieur d'une distance radiale a par rapport à l'axe de rotation (2).

3. Procédé selon l'une des revendications 1 à 2, **caractérisé en ce que** le premier composant (K1) est séparé du deuxième composant (K2) par centrifugation.

4. Procédé selon la revendication 3, **caractérisé en ce que** le mélange gazeux est choisi de telle sorte que le premier composant (K1) appartient à un première groupe de substances, le deuxième composant (K2) appartient à un deuxième groupe de substances, les substances du premier groupe sont congelées et les substances du deuxième groupe restent liquides à la température T₀ et sous la pression p₁, les substances congelées du premier groupe ayant une plus faible densité que les substances restées liquides du deuxième groupe.

5. Procédé selon la revendication 4, **caractérisé en ce que** le mélange gazeux liquéfié est évacué le long d'une zone incluant l'axe de rotation (2), dans laquelle s'établit une concentration (C1) du premier composant (K1) supérieure à la première concentration (C0).

6. Procédé selon l'une des revendications 2 à 5, **caractérisé en ce que** le mélange gazeux liquéfié parcourt le contenant (1) parallèlement à l'axe de rotation (2).

7. Procédé selon l'une des revendications 1 à 6, **caractérisé en ce que** le mélange gazeux est de l'air, dans lequel le premier composant (K1) est de l'azote et le deuxième composant (K2) de l'oxygène.

8. Procédé selon l'une des revendications 1 à 7, **caractérisé en ce que** l'on a 65 K ≤ T₀ ≤ 80 K, de préférence 70 K ≤ T₀ ≤ 75 K.

9. Procédé selon l'une des revendications 1 à 8, **caractérisé en ce que** l'on a 20 bar ≤ p₁ ≤ 2700 bar, de préférence 20 bar ≤ p₁ ≤ 1000 bar.
